Europäisches Patentamt

**European Patent Office**

Office européen des brevets

(19)

(11) Publication number: **0 056 713**
**B1**

(12) **EUROPEAN PATENT SPECIFICATION**

(45) Date of publication of patent specification: **21.08.85**

(51) Int. Cl.⁴: **B 32 B 15/08, B 32 B 27/04**

(21) Application number: **82300207.6**

(22) Date of filing: **15.01.82**

(54) Composites and methods for providing metal clad articles.

(30) Priority: **21.01.81 GB 8101796**
**21.01.81 GB 8101797**
**19.06.81 GB 8118988**

(43) Date of publication of application:
**28.07.82 Bulletin 82/30**

(45) Publication of the grant of the patent:
**21.08.85 Bulletin 85/34**

(84) Designated Contracting States:
**AT BE CH DE FR IT LI NL SE**

(56) References cited:
**EP-A-0 031 852**
**GB-A-1 079 047**
**GB-A-1 307 937**
**GB-A-1 311 019**
**GB-A-1 497 154**

(73) Proprietor: **SCOTT BADER COMPANY LIMITED**
**Wollaston**
**Wellingborough, Northamptonshire NN9 7RL**
**(GB)**

(72) Inventor: **Phillips, Cecil Luther**
**The Moorings Vyse Road**
**Boughton Northamptonshire (GB)**

(74) Representative: **Harrison, David Christopher**
**et al**
**MEWBURN ELLIS & CO 2/3 Cursitor Street**
**London EC4A 1BQ (GB)**

Courier Press, Leamington Spa, England.

**Description**

Field of the invention

This invention relates to composites for providing metal clad articles of thermosetting resin, methods of making the metal clad articles and metal clad articles so produced.

Background of the invention

Fibre reinforced plastics (FRP) laminates especially those based on thermosetting resins such as unsaturated polyesters, vinyl esters, epoxides, phenolics, furans and silicones have found wide use in industry. By correct choice of resin type and reinforcement the laminates can be used in the production of pipes, ducts, tanks, vessels for chemical plants, cladding and decorative panels for building, containers, tanks and pipes for potable liquids and foodstuffs, boats, cars and commercial vehicles, railway coaches, and many other applications.

However there are some aggressive environments that attack some or all the resin matrices that are used. This disadvantage has been overcome in some instances by the use of thermoplastics such as rigid polyvinyl chloride, polypropylene or fluorinated ethylene/propylene copolymers as facings to the laminate. Even so there are applications where metals such as aluminium or stainless steel perform better than FRP or FRP with a thermoplastic facing but where the lightness and load bearing properties of FRP would be an advantage.

Very thin sheets of metals (e.g. stainless steel) down to about 0.008 cm thick are now available and many applications can be foreseen where a material of this type with a FRP backing could be used, namely decorative metal faced building panels, metal faced sectional water tanks, metal lined pipes, ducts and tanks and metal faced components for the transport industry.

Unfortunately, little or no adhesion can be obtained between stainless steel and thermosetting resins such as standard unsaturated polyesters and vinyl esters even with careful preparation of the stainless steel surface. It has been stated that some resins such as epoxides or polyurethanes are self bonding on to stainless steel (GB—A—2,061,834) but these suffer from other disadvantages such as cost (epoxides) and low stiffness (polyurethanes).

It is known to join already preformed metal and plastics surfaces to one another by applying an adhesive to one of them, pressing the surfaces together and then allowing the adhesive to dry or cure.

For example, EP—A—0031852 is directed to a process for the continuous production of laminates by combining a plurality of impregnated sheets into a unitary stack by transferring them concurrently. Optionally, as described at pages 61—65, a metal cladding coated with a thermosetting adhesive may be applied when combining the impregnated sheets (Figure 6). Prior to this combination, the adhesive is dried by an oven (26). However, one is taught to effect drying to such an extent that the foil is not so non-tacky as even a conventional process (page 63 lines 12—16); in other words one is taught to ensure that curing occurs to an even lesser extent than in a conventional process.

GB—A—1307937 is directed to the use of a specific solvent-free, highly accelerated polyurethane-forming system for adhering two surfaces together. This adhesive is applied conventionally, namely by applying a thin layer of adhesive to one or *both* surfaces to be adhered and bringing them into contact with one another. In other words, both surfaces are already *preformed* prior to there being adhered (see for example page 2 lines 50—61). Referring specifically to Example 1, an aluminium sheet is coated with the adhesive and *before* the adhesive is allowed to cure, an *already preformed* glass fibre reinforced polyester is laid on the adhesive-coated aluminium.

GB—A—1311019 is directed to the production of a copper clad GRP laminate using a specific improved adhesive (page 3 lines 54—55). However, this adhesive, after coating on the copper foil is merely dried (page 4 lines 31—34) and is *not* cured until after the resin impregnated cloth to be united to the metal is brought into contact with the adhesive coated metal (see page 4 lines 69—74). Furthermore, the unitary laminate is formed by laying the adhesive coated metal on the resin impregnated gloss cloth and not vice versa.

We have found a way by which excellent adhesion can be obtained between a metal and those thermosetting resins which are not generally considered as being capable of bonding to metal.

Summary of the invention

According to the invention there is provided a composite for providing a rigid metal clad article of thermosetting resin which composite includes a metal facing, a layer of adhesive material on the metal facing and, laid on the layer·of adhesive material, a thermosetting resin characterized in that the thermosetting resin is an uncured curable said thermosetting resin and the layer of adhesive material consists essentially of a fully precured thermosetting or a thermoplastics material.

On subjecting the composite to a curing operation, a metal clad article in accordance with the invention is provided in which the metal facing is efficiently and easily bound to the thermoset resin by the adhesive.

A method aspect of the invention includes the steps of applying to the metal facing the said layer of adhesive material which said adhesive material is capable of adhesion to the metal facing and consists essentially of thermosetting material, bonding the said layer of adhesive material to the metal facing, which bonding is effected by fully curing the thermosetting material, laying on the said layer of adhesive material an uncured curable thermosetting resin and curing the said uncured curable thermosetting resin thereby bonding the adhesive material to the resin to provide the said metal clad article, which step of curing the said uncured curable thermosetting resin is carried out after the said full curing of the thermosetting material.

Another method aspect of the invention includes the steps of applying to the metal facing the said layer of adhesive material which said adhesive material is capable of adhesion to the metal facing and consists essentially of thermoplastics material, bonding the said layer of adhesive material to the metal facing by heating the thermoplastics material, laying on the said layer of adhesive material an uncured curable thermosetting resin and curing the said uncured curable thermosetting resin thereby bonding the adhesive material to the resin to provide the said metal clad article.

Any forming of the metal to a desired profile is carried out prior to bonding it to the other materials. The method of the invention is particularly applicable to the formation of profiled metal clad laminates of fibre reinforced thermosetting resin.

It is valuable that the method of the invention is a lamination onto the metal surface rather than the adhesion of the metal surface to a preformed laminate. Thus the cladding of the metal takes place at the same time as the formation/cure of the laminate when the thermosetting resin is brought together with the adhesive material and metal. This enables the adhesive material to bind with the thermosetting resin of the laminate on curing thus providing a surprisingly excellent adhesive bond between metal and laminate.

Excellent adhesion may be obtained between the metal and thermosetting resin by treating the metal surface with an adhesive material selected from a wide range of primers/adhesives the choice of which is explained in more detail hereinafter, allowing it to dry or cure and applying the thermosetting resin plus reinforcement (if required) in the uncured state and then curing the thermoset. The thermosetting resins may be applied in combination with reinforcement (if required) in either the wet state by standard processes, e.g. hand lay-up, spray up, filament winding, resin injection, (with or without vacuum assistance); cold press moulding, flexible bag moulding, rotational moulding and pultrusion and cured at ambient or elevated temperatures, or as pre-impregnated material or formulated moulding material such as sheet moulding compounds (SMC or its "high performance" derivatives HMC, XMC), bulk moulding compounds (BMC), dough moulding compounds (DMC) and granules pressed into contact with the treated surface and cured by heating under conventional hot press moulding conditions.

The metals can be formed into shape before lamination for example by pressing, cutting and welding, bending and stitching.

When the thermoset resin is reinforced, this is preferably achieved using reinforcing fibres of, for example, glass, silica, carbon, Kevlar® and similar polyaramids, and natural fibres such as jute.

The reinforcing fibre may be provided by at least one layer of fibrous material and this is preferably preimpregnated with the thermosetting resin ("prepreg"). Alternatively the fibres may be distributed within the thermosetting resin, as for example is the case with DMC.

Available adhesives are classified generally by their chemical nature (Adhesives Directory 1981, Wheatland Journals Ltd, Rickmansworth):—

(a) Natural Products, e.g. starch, bone glue,
(b) Cellulosics, e.g. cellulose acetate,
(c) Elastomerics, e.g. natural rubber,
(d) Synthetic Rubbers, e.g. nitrile, Neoprene®, styrene/butadiene,
(e) Thermoplastics, e.g. cyanoacrylates, hot melts (e.g. ethylene/vinyl acetate, polyamide), polyvinyl acetate, polyvinyl butyral, acrylics and copolymers,
(f) Thermosets, e.g. addition polymers such as epoxides, polyesters, vinyl esters, urethane acrylates, urethanes, anaerobic acrylics or condensation polymers, e.g. phenol formaldehyde, urea formaldehyde,
(g) Inorganic, e.g. sodium silicate.

We find that, in general, adhesives of groups (a), (b) and (g) do not work. In particular, inorganic adhesives (g) tend to be too rigid to form good bonds with the thermosetting resins forming the laminate.

Preferred adhesive materials are those thermosetting materials selected from group (f) and certain members of groups (c), and (d) and certain of the thermoplastic material (e), though we find that aqueous based adhesives within these latter groups in emulsion form tend to be inferior. Such aqueous based adhesives may, however, provide adequate adhesion on hot curing of the thermosetting resin forming the laminate.

The adhesive capability of an adhesive material is regarded as good if the resultant metal clad laminate has a lap shear of at least 3, and preferably ⩾3.5 Megapascals (MPa). It is strongly preferred that the lap shear strength be no less than 2.5 MPa.

The choice of adhesive material depends upon the nature of the thermosetting resin which is to form the laminate (the adhesive material must be compatible with the resin) and the metal facing to be provided. It depends also upon the conditions of curing to be employed.

Some adhesive materials provide good results only when used with a hot cured laminate and certain of the thermoplastics and, natural and synthetic rubbers fall into this category. Such hot curing is generally carried out at a temperature in the range 100—200°C, preferably 140—160°C, more preferably 150°C, and usually under pressure of about 1000—2000 psi (6.9—13.8 MPa), preferably 1500 psi (10.4 MPa).

On the other hand, other adhesive materials provide good results when used with a cold cured or a hot cured laminate, these including certain thermosetting resins and synthetic rubbers. Such cold curing is generally carried out at about ambient temperature, but may be followed by a "post-curing" step in which the material is heated to say 30—120°C, preferably at least 40°C.

For excellent results both on cold and hot curing of the laminate, an adhesive is selected which:—

(a) provides a good key to the metal surface (there are certain adhesives known to be useful for bonding metal to metal and some of these, though not all, are useful in the method of the present invention),

(b) is flexible, tough or resilient, i.e. having low modulus and

(c) is curable by crosslinking with minimum shrinkage before application of the laminating resin system.

Examples of adhesives which may give good results (though in some cases hot curing of the laminate is required) are thermosetting resins which contain polyurethane linkages and optionally additionally include acrylic (especially acrylate) linkages or terminal groups, acrylic resins (especially anaerobic acrylics), epoxy resins, unsaturated polyesters (provided that they form sufficiently flexible layers on curing), polymers containing vinyl acetate residues, nitrile rubbers, polyolefine and nitrile hot melt adhesives, cyanoacrylates, neoprene and natural rubbers.

Those adhesive materials which provide good results on hot curing of the laminate include hot melt polyolefins which may contain vinyl acetate residues.

Epoxy resins are also preferred for hot curing but will give excellent results on cold curing of certain thermosetting resins which form the laminate, e.g. epoxy thermosetting resins.

Some, though few adhesive materials, e.g. cyanoacrylates, give good results on cold curing of the laminate, but not on hot curing.

Adhesives which, in general, give excellent results both on cold and hot curing of the laminate include acrylics (especially anaerobic acrylics), certain unsaturated polyesters as later described, thermosetting resins which contain polyurethane linkages and optionally additionally contain acrylic (especially acrylate) linkages or terminal groups, and nitrile rubbers. In particular, nitrile rubbers provide excellent adhesion when used with a cold cured laminate.

This range of adhesives allows for a particularly wide choice of metal, thermosetting resin and curing conditions and this versatility is surprising. For example, although nitrile rubbers are known adhesives they have, in general, been applied only by hot curing in conventional adhesion processes. This contrasts with the excellent results we obtain on cold curing.

Excellent results can be achieved on cold curing, especially with the abovementioned range of adhesives. This enables the process to be carried out without having to apply heat, thus saving energy and rendering it easier and more economical to perform.

An especially preferred adhesive is one containing polyurethane linkages with terminal acrylate groups.

The preparation of a typical urethane/acrylate of this type is described below.

1.0 M Sorbitol and 18.0 M ε-Caprolactone were charged to a suitable reaction vessel and heated to 90—100°C with stirring. A cloudy homogeneous dispersion was obtained to which was added 0.2% p-toluene sulphonic acid. An exothermic reaction began almost instantaneously and the temperature rose peaking at 140—150°C.

The batch was allowed to cool naturally for 15 minutes and was then vacuum stripped. Less than 2% of charge weight was removed.

After stripping, the temperature was adjusted to 100—110°C and 3.5 M isophorone di-isocyanate was added. A gentle exotherm began and the batch temperature was allowed to rise to 120—130°C where it was controlled by cooling.

When the exotherm was over, the batch was cooled to 90—95°C and 3.5 M 2-hydroxy ethyl acrylate and 100 ppm hydroquinone were added. A below the surface feed of air was started and the temperature was adjusted to 80—85°C. The batch was maintained at this temperature until the isocyanate content was less than 0.6% (equivalent to 95% conversion). The batch was then dissolved in styrene to provide a composition containing approximately 60% solids by weight.

Although the most successful treatments are found to be based on anaerobic acrylics, urethanes, urethane/acrylics and nitrile rubbers, certain other treatments are usable if the three conditions above are fulfilled. For example, standard unsaturated polyesters do not give any adhesion due to their being too rigid and exhibiting too great a shrinkage on cure. However, using a specially formulated unsaturated polyester with an elongation at break (in cured form) of 50% and lower shrinkage than normal good bonding is achieved.

Again epoxy materials are well known metal adhesives but unless well cured prior to the application of the thermosetting resin which is to form the laminate (with resins other than epoxides) they give rise to interfacial problems through either attack of solvents on the partially cured epoxy or inhibition of the cure of the FRP by substances leached from the partially cured epoxy.

The adhesive material may be used in any suitable form, e.g., dissolved in a solvent, as a melt, as a powder, or as a discrete sheet of material. It may be a single- or two- component system. Depending upon the form of adhesive selected, it may be applied to the metal surface by for example, brushing or spraying or simply laying it upon the metal surface and as some adhesive materials are anaerobic, i.e. only cure

**0 056 713**

properly in the absence of air, a thin sheet of PTFE can be laid over the coat of material and left in place until the adhesive layer is cured, after which the sheet is removed before subsequent lamination. An alternative, though less preferred method of obtaining adhesion, is to apply the adhesive to the metal and before it cures to apply reinforcement e.g. glass chopped strand mat to the surface so that some of the fibres are in the adhesive layer whilst most are protruding. Some adhesive materials are available as hot melt films which can be melted on to the metal before subsequent lamination or if the whole structure is to be cured by hot pressing laid between the metal and the moulding composition or pre-impregnated material.

The thermosetting resins used to make the laminates may, for example, be unsaturated polyesters, vinyl esters, urethanes, acrylates, epoxides, phenolic resins, furans, or silicones, and may be copolymers, e.g. urethane/acrylates. Preferred resins are unsaturated polyesters, phenolic resins, furane resins and epoxy resins. They may be compounded with thixotropic agents e.g. gaseous silicas, fillers e.g. natural and precipitated calcium carbonates, clays, talc, mica, silica, hydraulic cements and pigments if required. The curing of these laminates can be, in the case of polyesters, vinyl esters and urethane acrylates, by organic peroxides and heat, organic peroxides plus so called accelerators, visible or U.V. light, electron beams and in the case of epoxides by the well known curing agents and for furanes and phenolics the various catalysts available.

The procedure is capable of being used with a wide range of metals in thicknesses of 0.08 mm upwards but normally the thinnest material would be used for economical reasons. The metals include stainless steel, chromium, titanium, aluminium, tin, copper, lead, zinc, phosphor bronze, nickel, molybdenum, galvanised steel, brass and mild steel. Good bonds as measured by lap shear and peel strengths, can be obtained when the metals are solvent degreased before application of the adhesive material but improved adhesion can be obtained by abrasion followed by a solvent wipe, alkaline or acid etching.

Particularly preferred metal clad laminates of the invention are metal clad FRP laminates. Their structures combine the best features of the metals and FRP which can be summarised as:—

(i) the high strength to weight ratio of FRP giving components of lower weight than if made wholly of metal,

(ii) the imperviousness of metals which prevents moisture and other aggressive environments from attacking FRP and causing long term loss of strength and, blistering,

(iii) the chemical resistance of metal such as stainless steel, titanium and, nickel alloys which allows a choice of metal according to the environment,

(iv) the desirable hygienic properties of metals such as stainless steel for use in contact with foodstuffs and potable liquids,

(v) very good reverse impact resistance as large loads can be sustained without failure of the metal facing,

(vi) the fire resistance of the metal facing and absence of smoke which can be important for example inside a duct,

(vii) the electrical properties of metals, i.e. conductance and shielding,

(viii) the decorative properties of metals, i.e. in building panels.

Metal clad laminates of the invention are thus extremely versatile and have a very wide range of uses particularly in structural applications, for example, in the production of pipes, ducts, tanks, vessels for chemical plants, cladding and decorative panels for building, containers, tanks and pipes for potable liquids and foodstuffs, boats, cars and commercial vehicles, railway coaches, and many other applications.

There is no reason why the metal clad laminate should have only one metal face; both faces could be metal and they need not be similar metals. Similarly sandwich structures with light weight cores can be formed having one or both faces of metal foils e.g. metal/primer/FRP/foam or honeycomb/FRP, or metal/primer/FRP/foam or honeycomb/FRP/primer/metal.

Description of preferred embodiments

Metal clad laminates embodying the invention, composites for providing them and methods of metal clad laminate formation will now be described in more detail with reference to the following Examples which include some comparative examples. The presently most preferred embodiments are those in which the laminate is cold cured.

Example I

A thin sheet of stainless steel (0.25 mm thick) was solvent degreased and coated with Permabond® F241 adhesive (one component of a 2 pot acrylic system) and Permabond initiator No. 1 (hardener) at 200 g/m². This layer was covered by a polytetrafluoroethylene (PTFE) sheet until cured, when it was peeled off. A glass fibre reinforced polyester laminate was then laid up on the treated metal surface using Crystic® 272 (an isophthalic acid based unsaturated polyester resin), suitably catalysed and accelerated, and 4 layers of glass chopped strand mat (450 g/m²) at a resin:glass ratio of 2.3:1. The polyester of the resultant composite was then allowed to cure at ambient temperature to form a metal clad laminate.

When the polyester had cured it was extremely difficult to separate from the stainless steel facing (lap shear strength 3.5 MPa).

5

Example IA

A sheet of stainless steel was coated with Permabond F241 adhesive and a piece of satin weave glass fibre fabric 340 g/m² was immersed in an acetone solution of Permabond Initiator No. 1 (9 pts by weight acetone:1 part initiator) and the acetone allowed to evaporate. The glass fibre was rolled on to the treated stainless steel surface and good adhesion was obtained.

A glass fibre laminate was then laid up on the glass fabric using Crystic 272 suitably catalysed and accelerated and 4 layers of glass chopped strand mat (450 g/m²) at a resin: glass ratio of 2.3:1.

After the GRP layers of the resultant composite had been allowed to cure at ambient temperature it was extremely difficult to separate them from the stainless steel facing.

Example II—XX

The procedure of Example I was followed except that the treatments shown in Table I were used.

TABLE I

| Example | Treatment/type | Lap shear strength (MPa) |
|---------|----------------|--------------------------|
| II | Crystic® 272 (Polyester) | <1 |
| III | Tenaxatex® 3964 (Polyvinyl acetate emulsion) | 3 |
| IV | Derakane® 411-45 (Vinyl ester) | <1 |
| V | Indasol® NS240 (Natural rubber latex) | <1 |
| VI | Indatex® SE765 (Acrylic emulsion) | <1 |
| VII | Indasol® CS 1659 (Neoprene latex) | <1 |
| VIII | Permabond® E04 (2 pot epoxy RT cure) | <1 |
| IX | as VIII but cured 24 hours at 40°C | 3 |
| X | Crodafix® 27-8-700 (Ethylene/vinyl acetate emulsion) | 2 |
| XI | Permabond® C (Cyanoacrylate with PTFE sheet curing) | 3 |
| XII | Permabond® A (Anaerobic—cured 30 mins at 150°C with PTFE sheet curing) | 3 |
| XIII | Permabond® E15 (2 Pot epoxy—cured 24 hours at RT) | 4 |
| XIV | as XIII but thereafter post-cured for 24 hours at 40°C) | 5.5 |
| XV | Permabond® ESP110 (1 pot epoxy—cured 5 mins at 160°C) | 4 |
| XVI | Crystic® D4176A (Flexible polyester cured 18 hrs at RT) | 4 |
| XVII | as XVI but then post-cured for 18 hours at 40°C | 5.5 |
| XVIII | Crodagrip® 14-00300 (2 pot polyurethane) | 5 |
| XIX | Indasol® MS419NF (Nitrile rubber) | 6 |
| XX | Polyfunctional acrylate terminated polymer containing urethane linkages with 80 pphr talc as filler | 6.5 |

Example XXI

A sheet of stainless steel 0.25 mm thick was cut to conform to the shape of a flat plate mould 100×260 mm. The metal sheet was solvent degreased, coated with Indasol® MS419NF (a nitrile rubber adhesive) at 200 g/m² and allowed to dry. The treated metal was placed in the mould with the untreated side in contact with the lower mould surface and the mould loaded with Crystic M125 (a sheet moulding compound) and reinforcing fibres to cover 70% of the surface area. The mould was closed and pressing of the resultant composite took 4 minutes at 150°C under a pressure of 1,500 (10.4 MPa) p.s.i. to effect curing.

On opening the mould a stainless steel faced FRP sheet was obtained which was extremely strong with good adhesion between the FRP and the metal face (single lap shear strength 5.5 MPa).

Examples XXII—XXXVII

The procedure of Example XXI was followed except that the treatments shown in Table II were used.

TABLE II

| Example | Treatment/type | Lap shear strength (MPa) |
|---|---|---|
| XXII | Crystic® 272 (Polyester) | <1 |
| XXIII | Derakane® 411-45 (Vinyl ester) | <1 |
| XXIV | Tenaxatex® 4611 (nitrile phenolic) | <1 |
| XXV | Nutrim® 5003 (Nitrile phenolic ironed-on film) | <1 |
| XXVI | as XXV but cured 30 mins at 150°C | 3 |
| XXVII | Indatex® SE765 (Acrylic emulsion) | <1 |
| XXVIII | Tenaxatex® 3964 (Polyvinyl acetate emulsion) | 2 |
| XXIX | Permabond® C (Cyanoacrylate) | 2 |
| XXX | Indasol® NS240 (Natural rubber latex) | 3 |
| XXXI | Indasol® CS1659 (Neoprene latex) | 3 |
| XXXII | Crodafix® 27-8-700 (Ethylene/vinyl acetate emulsion) | 3 |
| XXXIII | Igetabond 7B100 (Polyolefine copolymer hot melt) | 3.5 |
| XXXIV | Crodagrip® 14-00300 (2 pot polyurethane) | 4 |
| XXXV | Polyfunctional acrylate terminated polymer containing urethane linkages with 80 pphr talc as filler | 4 |
| XXXVI | Permabond® E04 (2 pot epoxy) | 4.5 |
| XXXVII | Permabond® F241 (2 pot acrylic covered by PTFE sheet until cured) | 5.5 |

Example XXXIIIA

The procedure of Example XXXIII was also carried out using Crystic® M225A sheet moulding compound (fire retardant grade). On impact testing it was found that the GRP laminate could be fractured without penetrating the stainless steel facing. There was good adhesion between the FRP and metal face (single lap shear strength 3.5 MPa). Furthermore, after curing, the laminate was easily removed from the mould. The mould walls were of chrome plated steel; hence the laminate did not adhere to them.

Examples XXXVIII—L

The same procedure as in Examples I—XX or XXI—XXXVII were used but the stainless steel was replaced by thin sheets of other metals.

|  | | | Lap shear strength MPa |
|---|---|---|---|
| XXXVIII | Aluminium | as Ex. I | 6 |
|  |  | as Ex. XXI | 5 |
| XXXIX | Copper | as Ex. XIX | 5.5 |
|  |  | as Ex. XXXVII | 4.5 |
| XL | Brass | as Ex. XVIII | 4 |
|  |  | as Ex. XXI | 4 |
| XLI | Zinc | as Ex. I | 6.5 |
|  |  | as Ex. XXXIV | 4.5 |
| XLII | Phosphor Bronze | as Ex. XX | 6.5 |
|  |  | as Ex. XXI | 3.5 |
| XLIII | Nickel | as Ex. XX | 7 |
|  |  | as Ex. XXI | 6 |
| XLIV | Tin | as Ex. XX | 5 |
|  |  | as Ex. XXXV | 5 |
| XLV | Titanium | as Ex. XVIII | 5 |
|  |  | as Ex. XXXVI | 4.5 |
| XLVI | Molybdenum | as Ex. XIX | 9 |
|  |  | as Ex. XXXIV | 7 |
| XLVII |  | as Ex. I | 2 |
|  |  | as Ex. XXXVII | 5 |
| XLVIII | Chromium | as Ex. XV | 4 |
|  |  | as Ex. XXXVI | 5 |
| XLIX | Mild Steel | as Ex. XX | 9 |
|  |  | as Ex. XXI | 7 |
| L | Galvanised Steel | as Ex. XIX | 7.5 |
|  |  | as Ex. XXXIV | 5.5 |

Example LI

A sheet of stainless steel (0.5 mm thick) was solvent degreased and coated with Indasol® MS419NF (nitrile rubber adhesive) at 200 g/m². This was allowed to dry and a glass reinforced phenolic resin laminate laid up on the treated surface using 4 layers of chopped strand mat (450 g/m²) at a resin:glass ratio of 3:1. After the glass reinforced phenolic resin of the resultant composite had been allowed to cure at ambient temperature it was difficult to separate from the stainless steel and the bond had a single lap shear strength of 3 MPa.

# 0 056 713

### Example LII
The same procedure as in Example LI was followed except that the laminating resin was a Quaker furane resin.

### Example LIII
A sheet of aluminium (0.5 mm thick) was solvent degreased and treated with Permabond® E04 (a two pot epoxy) at 200 g/m². This was allowed to cure and a glass reinforced epoxide laminate laid up on the treated surface using 4 layers of chopped strand mat (450 g/m²) Epikote 828+Epicure at a resin:glass ratio of 3:1. After the glass reinforced epoxide laminate of the resultant composite had been allowed to cure at ambient temperature it was extremely difficult to separate from the metal (lap shear strength 6 MPa).

### Examples LIV—LVII
A sheet of aluminium (0.25 mm thick) was solvent degreased and treated with Indasol® MS419NF (nitrile rubber adhesive) at 200 g/m². This was allowed to dry and one layer of 450 g/m² CSM with Crystic 272 at a resin:glass ratio of 2.5:1 was laid up on the treated surface. A 12.7 mm thick PVC foam sheet was pushed into the wet resin layer and a 2 layer CSM (450 g/m² per layer)—Crystic 272 laminate was laid up on top of the foam to form a composite which, on curing at ambient temperature, provided stiff metal clad foam cured laminate structure.

This procedure was repeated using polyester foam as a replacement core material, phenolic foam as a replacement core material and polyurethane as a replacement core material.

### Example LVIII
Metal faced sectional tank panels can readily be made using the techniques developed.

A thin stainless steel sheet 4' 4" (1.32 m) square×0.5 mm thick had four corner squares 2"×2" (5.1×5.1 cm) cut from it and it was then folded to give a tray shaped sheet 4'×4' (1.22×1.22 m) flanges all round. The corners were joined by welding or soldering. The inside surface of the formed tray was solvent degreased and treated with a nitrile rubber adhesive at 200 g/m² and allowed to dry.

The shaped primed metal tray was then transferred to the female tool in a press where it effectively became part of the tool. A charge of sheet moulding compound (SMC) (Crystic® M125) sufficient to give the required laminate thickness was then loaded and the mould closed. Under the influence of pressure and heat the SMC of the resultant composite flowed and cured so that when released a stainless steel clad FRP sectional tank panel was obtained. The bond between the stainless steel and the FRP was excellent and the panel had the following advantages over traditional steel or unfaced SMC panels:—

a. the external SMC face requires minimal maintenance,

b. the internal surface is a well known and trusted corrosion resistant surface acceptable in the food industry,

c. the internal surface is impermeable and unlike SMC will not lose mechanical properties or blister on long contact with water,

d. the internal surface is not broken when large impact loads are applied to the outer surface.

Although the tray shape was made by cutting and welding the edges it can also be made by drawing the metal.

Similar processes can be used to manufacture automotive body parts, printed circuit boards, filter plates and, container panels.

### Example LIX
Metal lined pipes were formed by using the following technique.

A thin stainless steel sheet 0.25 mm thick and 12 inches (30 cm) wide was wound round a 12" (30 cm) diameter mandrel in a spiral fashion with a 1" (2.5 cm) overlap. The overlap joints were sealed using Crodagrip® 14-00300 (a 2 pot polyurethane).

The complete surface of the stainless steel was then covered with the same 2 pot polyurethane and allowed to dry to a layer 0.25 mm thick.

Glass fibre rovings impregnated with Crystic® 272 (an isophthalic acid based unsaturated polyester resin), suitably catalysed and accelerated were spirally wound on top of the primed stainless steel to give a reinforced layer 5 mm thick.

After allowing the resin of the resultant composite to cure at ambient temperature the pipe was removed from the mandrel.

The thin stainless steel liner provided a perfect barrier to a wide range of chemical environments and the structural rigidity was provided by the FRP winding.

Chemical tanks can be made by a similar process.

### Example LX
Metal lined ducts and pipes were made by an alternative technique in which the 0.25 mm stainless steel sheet 36" (91 cm) wide was joined longitudinally using an overlap joint bonded together with Crodagrip® 14-00300 (a two pot polyurethane). The 11" (18 cm) diameter metal liner was supported on a mandrel and the exterior surface was coated with a polyfunctional acrylate terminated polymer containing

9

urethane linkages which had been suitably catalysed and accelerated. The priming layer was allowed to cure and glass rovings impregnated with Derakane® 411-45, suitably catalysed and accelerated, were spirally wound on top of the primed metal to give a reinforced layer 5 mm thick. After allowing the resin of the resultant composite to cure at ambient temperature the 12″ (30 cm) diameter metal lined pipe thus produced was removed from the mandrel.

Example LXI

Larger diameter pipes and tanks can be made by longitudinally jointing more than one sheet of metal liner. This can be done by using a fold stitching pistol e.g. Atlas Copco Tagger 310, with a jointing film of PTFE tape between the metal faces and then folding over the jointed flange before applying a treatment of suitable adhesive. Thus 4 sheets of stainless steel 36″ (91 cm) wide were joined together longitudinally as stated above to give the body of a circular tank approximately 45″ (1.1 m) diameter. This was placed on a mandrel and the external surface solvent degreased and coated with Indasol® MS419NF. When the coating was dry glass fibre rovings impregnated with Crystic® 272, suitably catalysed and accelerated were spirally wound on top of the primed steel to give a reinforced layer 5 mm thick. The resultant composite provided, after curing at ambient temperature, a metal lined tank which was removed from the mandrel.

Example LXII

Thin aluminium sheet 0.45 mm thick was abraded, degreased and coated with a polyfunctional acrylate terminated polymer containing urethane linkages which contained 80 pphr talc filler, suitably catalysed and accelerated, at 200 $g/m^2$. After this had cured Crystic® 272 resin containing 33% by weight Fillite® (silica hollow microspheres) was suitably catalysed and accelerated and poured on to the sheet to a depth of 10 mm. After this layer of the resultant composite had been allowed to cure at ambient temperature, one layer of 450 $g/m^2$ glass chopped strand mat was laid down and impregnated with catalysed and accelerated Crystic® 272.

The resultant metal clad laminate could be used as a decorative building panel with the aluminium surface providing good weatherability.

Example LXIII

Two sheets of stainless steel were solvent degreased treated with Indasol® MS419NF and allowed to dry. A layer of sheet moulding compound was sandwiched between the two treated surfaces and the resultant composite cured under heat and pressure. The double faced metal coated laminate showed good adhesion at all the interfacial bond lines.

Dissimilar metals can be used for each face to satisfy different environmental conditions.

Example LXIV

A sheet of stainless steel (0.25 mm thick) was solvent degreased and treated with Indasol® MS419NF and allowed to dry. A laminate containing 6 layers of 300 $g/m^2$ woven Kevlar® reinforcement and Crystic® 272 at a resin:fibre ratio of 1:1 was laid up on the primed steel. After the resin of the resultant composite had been allowed to cure at ambient temperture, the resulting material was stronger and stiffer than an equivalent glass reinforced laminate due to the inherent better properties of Kevlar fibres.

Example LXV

A thin satin finish stainless steel sheet was pressed and drawn to the shape of an automobile boot lid. It was degreased with solvent and, the inside surface coated with Crodagrip® 14-00300 at 200 $g/m^2$ which was allowed to cure. The cured primed steel was then placed in a two part mould and the requisite amount of continuous strand glass fibre mat, tailored to fit the mould, laid on to the primed surface. The mould was closed and suitably catalysed and accelerated Crystic® 272 (an unsaturated polyester resin) was injected into the mould until all the air in the mould had been pushed out. Injection of resin then ceased and the resin of the resultant composite was allowed to cure at ambient temperature. When the mould was opened a FRP boot lid was obtained with an attractive satin finish stainless steel face which had excellent adhesion to the FRP.

In the above examples, various commercial products have been described by trade names which are registered Trade Marks of the following respective companies.

Crystic—Scott Bader Company Limited.
Derakane—Dow Chemical Company.
Tenaxatex—Williams Adhesives Limited.
Indasol—Industrial Adhesives Limited.
Indatex—Industrial Adhesives Limited.
Permabond—Permabond Adhesives Limited.
Crodafix—Croda Adhesives Limited.
Crodagrip—Croda Adhesives Limited.
Nutrim—Aluminium Developments Limited.
Igetabond—Sumitomo Chemical Company Limited.
Kevlar—E.I. du Pont de Nemours Inc.

## Claims

1. A composite for providing a rigid metal clad article of thermosetting resin which composite includes a metal facing, a layer of adhesive material on the metal facing and, laid on the layer of adhesive material, a thermosetting resin characterized in that the thermosetting resin is an uncured curable said thermosetting resin and the layer of adhesive material consists essentially of a fully precured thermosetting or a thermoplastics material.

2. A composite according to claim 1, wherein the adhesive material is effective upon cold curing of the said uncured curable thermosetting resin.

3. A composite according to claim 1, wherein the adhesive material is effective upon hot curing of the said uncured curable thermosetting resin.

4. A composite according to any one of the preceding claims, wherein the adhesive material is a fully cured thermosetting material which (a) contains polyurethane linkages and optionally additionally includes acrylic linkages or terminal groups, (b) is an acrylic resin, (c) is an epoxy resin, (d) is an unsaturated polyester, (e) is a polymer containing vinyl acetate residues, (f) is neoprene, (g) is nitrile rubber or (h) is natural rubber.

5. A composite according to claim 4, wherein the thermosetting material is an acrylic, nitrile rubber, urethane or urethane/acrylic resin.

6. A composite according to claim 4, as appendant to claim 3, wherein the adhesive material is an epoxy resin.

7. A composite according to any one of the preceding claims, wherein the said uncured curable thermosetting resin includes reinforcing fibre.

8. A composite according to any one of the preceding claims, wherein the metal facing is stainless, mild or galvanized steel, aluminium, copper, brass, phosphor bronze, zinc, nickel, tin, titanium, molybdenum or chromium.

9. A method of forming a rigid metal clad article having a metal facing bonded to a thermoset resin by a layer of adhesive material characterized in that the method includes the steps of applying to the metal facing the said layer of adhesive material which said adhesive material is capable of adhesion to the metal facing and consists essentially of thermosetting material, bonding the said layer of adhesive material to the metal facing, which bonding is effected by fully curing the thermosetting material, laying on the said layer of adhesive material an uncured curable thermosetting resin and curing the said uncured curable thermosetting resin thereby bonding the adhesive material to the resin to provide the said metal clad article, which step of curing the said uncured curable thermosetting resin is carried out after the said full curing of the thermosetting material.

10. A method of forming a rigid metal clad article having a metal facing bonded to a thermoset resin by a layer of adhesive material characterized in that the method includes the steps of applying to the metal facing the said layer of adhesive material which said adhesive material is capable of adhesion to the metal facing and consists essentially of thermoplastics material, bonding the said layer of adhesive material to the metal facing by heating the thermoplastics material, laying on the said layer of adhesive material an uncured curable thermosetting resin and curing the said uncured curable thermosetting resin thereby bonding the adhesive material to the resin to provide the said metal clad article.

11. A method according to claim 9, wherein the said step of curing the said uncured curable thermosetting resin is a cold curing step.

12. A method according to claim 10, wherein the adhesive material is a thermosetting material which (a) contains polyurethane linkages and optionally includes acrylic groups or residues, (b) is an acrylic resin, (c) is an epoxy resin, (d) is an unsaturated polyester, (e) is a polymer containing vinyl acetate residues, (f) is neoprene, (g) is nitrile rubber or (h) is natural rubber.

13. A method according to claim 9 or claim 10, wherein the said step of curing the said uncured curable thermosetting resin is a hot curing step.

14. A method according to claim 13, wherein the adhesive material is a thermoplastics material which is a hot melt adhesive in the form of a discrete layer.

15. A method according to claim 9, wherein the step of curing the thermosetting material is a cold curing step.

## Patentansprüche

1. Verbundkörper zur Schaffung eines starren, mit Metall beschichteten Gegenstandes aus unter Temperatureinwirkung härtendem Harz, welcher Verbundkörper eine Metallverkleidung, eine Schicht aus Klebematerial auf der Metallverkleidung und aufgelegt auf die Schicht aus Klebematerial ein unter Temperatureinwirkung härtendes Harz einschließt, dadurch gekennzeichnet daß das genannte unter Temperatureinwirkung härtende Harz ein ungehärtetes, härtbares, unter Temperatureinwirkung härtbares Harz ist und die Schicht aus Klebematerial im wesentlichen aus einem voll vorgehärteten, unter Temperatureinwirkung härtenden Material oder aus einem thermoplastischen Material besteht.

2. Verbundkörper nach Anspruch 1, worin das Klebematerial bei Kalthärten des genannten ungehärteten, unter Temperatureinwirkung härtbaren Harzes wirkt.

3. Verbundkörper nach Anspruch 1, worin das Klebematerial bei Heißhärten des genannten ungehärteten, unter Temperatureinwirkung härtenden Harzes wirkt.

4. Verbundkörper nach einem der vorhergehenden Ansprüche, worin das Klebematerial ein voll ausgehärtetes, unter Temperatureinwirkung härtendes Material ist, das (a) Polyurethanbindungen enthält und gegebenenfalls zusätzlich Acrylbindungen oder endständige Gruppen einschließt, (b) ein Acrylharz ist, (c) ein Epoxyharz ist, (d) ein ungesättigter Polyester ist, (e) ein Vinylacetatreste enthaltendes Polymer ist, (f) Neopren ist, (g) Nitrilgummi ist oder (h) ein natürlicher Gummi ist.

5. Verbundkörper nach Anspruch 4, worin das unter Temperatureinwirkung härtende Material ein Acrylderivat, Nitrilgummi Urethan oder Urethan/Acrylharz ist.

6. Verbundkörper nach Anspruch 4, abhängig von Anspruch 3, worin das Klebematerial ein Epoxyharz ist.

7. Verbundkörper nach einem der vorhergehenden Ansprüche, worin das ungehärtete, unter Temperatureinwirkung härtbare Harz Verstärkungsfasern enthält.

8. Verbundkörper nach einem der vorhergehenden Ansprüche, worin die Metallverkleidung Edelstahl, Flußstahl oder galvanisierter Stahl, Aluminium, Kupfer, Messing, Phosphorbronze, Zink, Nickel, Zinn, Titan, Molybdän oder Chrom ist.

9. Verfahren zur Bildung eines starren, mit Metall beschichteten Gegenstandes mit einer Metallverkleidung, die über eine Schicht aus Klebematerial an ein unter Temperatureinfluß härtbares Harz gebunden ist, dadurch gekennzeichnet, daß das Verfahren die Schritte des Aufbringens auf die Metallverkleidung der genannten Schicht von Klebematerial, welches Klebematerial fähig ist, an der Metallverkleidung zu haften und im wesentlichen aus unter Temperatureinwirkung härtendem Material besteht, des Bindens der genannten Schicht aus Klebematerial an die Metallverkleidung, welche Bindung durch volles Aushärten des unter Temperatureinwirkung härtenden Materials bewirkt wird, des Auflegens eines ungehärteten, unter Temperatureinwirkung härtbaren Harzes auf die genannte Schicht aus Klebematerial und Härten des genannten ungehärteten, unter Temperatureinwirkung härtbaren Harzes umfaßt, wodurch das Klebematerial an das Harz gebunden wird, um den genannten, mit Metall beschichteten Gegenstand zu schaffen, welcher Schritt des Härtens des ungehärteten, unter Temperatureinwirkung härtbaren, Harzes nach dem genannten vollen Aushärten des unter Temperatureinwirkung härtbaren Materials durchgeführt wird.

10. Verfahren zur Bildung eines mit Metall beschichteten Gegenstandes mit einer Metallverkleidung, die über eine Schicht aus Klebematerial an ein unter Temperatureinwirkung härtbares Harz gebunden ist, dadurch gekennzeichnet, daß das Verfahren die Schritte des Aufbringens der genannten Schicht aus Klebematerial auf die Metallverkleidung, welches Klebematerial fähig ist, an der Metallverkleidung zu haften und im wesentlichen aus thermoplastischem Material besteht, des Bindens der genannten Schicht aus Klebematerial an die Metallverkleidung durch Erhitzen des thermoplastischen Materials, des Auflegens auf die genannte Schicht von Klebematerial eines ungehärteten, unter Temperatureinwirkung härtbaren, Harzes und des Härtens des genannten ungehärteten, unter Temperatureinwirkung härtenden, Harzes umfaßt, wodurch das Klebematerial an das Harz gebunden wird, um den genannten, mit Metall beschichteten Gegenstand zu bilden.

11. Verfahren nach Anspruch 9, dadurch gekennzeichnet, daß der Schritt des Härtens des ungehärteten, unter Temperatureinwirkung härtenden, Harzes ein Kalthärtungsschritt ist.

12. Verfahren nach Anspruch 10, dadurch gekennzeichnet, daß das Klebematerial ein unter Temperatureinwirkung härtendes Material ist, das (a) Polyurethanbindungen und gegebenenfalls Acrylgruppen oder- reste enthält, (b) ein Acrylharz ist, (c) ein Epoxyharz ist, (d) ein ungesättigter Polyester ist, (e) ein Vinylacetatreste enthaltendes Polymer ist, (f) Neopren ist, (g) Nitrilgummi ist oder (h) natürlicher Gummi ist.

13. Verfahren nach Anspruch 9 oder 10, worin der genannte Schritt des Härtens des ungehärteten unter Temperatureinwirkung härtbaren, Harzes ein Heißhärtungsschritt ist.

14. Verfahren nach Anspruch 13, worin das Klebematerial ein thermoplastisches Material ist, das ein Heißschmelzklebstoff in Form einer definierten Schicht ist.

15. Verfahren nach Anspruch 9, worin der Schritt des Härtens des unter Temperatureinwirkung härtenden Materials ein Kalthärtungsschritt ist.

**Revendications**

1. Produit composite pour fabriquer un article rigide revêtu de métal en résine thermodurcissable, lequel produit composite comprend un revêtement de surface de métal, une couche d'un matériau adhésif sur le revêtement de surface de métal et, sur la couche du matériau adhésif, une résine thermodurcissable caractérisé en ce que la résine thermodurcissable est une résine thermodurcissable durcissable non durcie et la couche du matériau adhésif consiste essentiellement en un matériau thermodurcissable totalement prédurci ou thermoplastique.

2. Produit composite selon la revendication 1 où le matériau adhésif est efficace lors d'un durcissement à froid de ladite résine thermodurcissable durcissable non durcie.

3. Produit composite selon la revendication 1 où le matériau adhésif est efficace lors d'un durcissement à chaud de ladite résine thermodurcissable durcissable non durcie.

4. Produit composite selon l'une quelconque des revendications précédentes où le matériau adhésif est un matériau thermodurcissable totalement durci qui (a) contient des laisons de polyuréthane et éventuellement de plus comprend des liaisons ou groupes terminaux acryliques, (b) est une résine acrylique, (c) est une résine époxy, (d) est un polyester insaturé, (e) est un polymère contenant des résidus d'acétate de vinyle, (f) est du néoprène, (g) est du caoutchouc nitrile ou (h) est du caoutchouc naturel.

5. Produit composite selon la revendication 4 où le matériau durcissable est un acrylique, du caoutchouc nitrile, de l'uréthane ou une résine uréthane/acrylique.

6. Produit composite selon la revendication 4 se rapportant à la revendication 3 où le matériau adhésif est une résine époxy.

7. Produit composite selon l'une quelconque des revendications précédentes où ladite résine thermodurcissable durcissable non durcie comprend une fibre de renforcement.

8. Produit composite selon l'une quelconque des revendications précédentes où le revêtement de surface de métal est de l'acier inoxydable, doux ou galvanisé, de l'aluminium, du cuivre, du laiton, du bronze phosphoreux, du zinc, du nickel, de l'étain, du titane, du molybdène ou du chrome.

9. Procédé de formation d'un article rigide revêtu de métal ayant un revêtement de surface de métal lié à une résine thermodurcie par une couche d'un matériau adhésif caractérisé en ce que le procédé comprend les étapes d'appliquer, au revêtement de surface de métal, ladite couche du matériau adhésif, ledit matériau adhésif étant capable d'une adhérence au revêtement de surface de métal et consistant essentiellement en un matériau thermodurcissable, lier ladite couche de matériau adhésif au revêtement de surface en métal, laquelle liaison est effectuée en durcissant totalement le matériau thermodurcissable, disposer sur ladite couche de matériau adhésif, une résine thermodurcissable durcissable non durcie et durcir ladite résine thermodurcissable durcissable non durcie pour ainsi lier le matériau adhésif à la résine pour former ledit article revêtu de métal, laquelle étape de durcissement de ladite résine thermodurcissable durcissable non durcie est effectuée après le plein durcissement du matériau thermodurcissable.

10. Procédé de formation d'un article rigide revêtu de métal ayant un revêtement de surface de métal lié à une résine thermodurcissable par une couche de matériau adhésif caractérisé en ce que le procédé comprend les étapes d'appliquer, au revêtement de surface de métal, ladite couche du matériau adhésif, ledit matériau adhésif étant capable d'adhérence au revêtement de surface de métal et consistant essentiellement en une matière thermoplastique, de lier ladite couche du matériau adhésif au revêtement de surface de métal en chauffant le matériau thermoplastique, de disposer sur ladite couche du matériau adhésif une résine thermodurcissable durcissable non durcie et de durcir la résine thermodurcissable durcissable non durcie pour ainsi lier le matériau adhésif à la résine pour former ledit article revêtu de métal.

11. Procédé selon la revendication 9 où ladite étape de durcir ladite résine thermodurcissable durcissable non durcie est une étape de durcissement à froid.

12. Procédé selon la revendication 10 où le matériau adhésif est un matériau thermodurcissable qui (a) contient des liaisons de polyuréthane et contient éventuellement des groupes acryliques ou résidus, (b) est une résine acrylique, (c) est une résine époxy, (d) est un polyester insaturé, (e) est un polymère contenant des résidus d'acétate de vinyle, (f) est du néoprène, (g) est un caoutchouc nitrile où (h) est un caoutchouc naturel.

13. Procédé selon la revendication 9 ou la revendication 10 où ladite étape de durcissement de ladite résine thermodurcissable durcissable non durcie est une étape de durcissement à chaud.

14. Procédé selon la revendication 13 où le matériau adhésif est un matériau thermoplastique qui est un adhésif thermofondu sous la forme d'une couche distincte.

15. Procédé selon la revendication 9 où l'étape de durcir le matériau thermodurcissable est une étape de durcissement à froid.